# EUROPEAN PATENT APPLICATION

(11) **EP 4 060 532 A1**
(43) Date of publication of application: **21.09.2022**
(21) Application number: 20905164.8
(22) Date of filing: 04.11.2020
(51) Int. Cl.: G06F 21/55, G06F 21/64

(54) **TAMPERED-WITH APPARATUS SPECIFYING SYSTEM, TAMPERED-WITH APPARATUS SPECIFYING PROGRAM, AND TAMPERED-WITH APPARATUS SPECIFYING METHOD**

(30) Priority: 24.12.2019 JP 2019232333
(71) Applicant: KOBELCO CONSTRUCTION MACHINERY CO., LTD., Hiroshima-shi Hiroshima 731-5161 (JP)
(72) Inventor: HAMAMOTO, Ryo, Saeki-ku, Hiroshima-shi Hiroshima 731-5161 (JP); ENDO, Kazuomi, Saeki-ku, Hiroshima-shi Hiroshima 731-5161 (JP)
(74) Representative: TBK
(86) International application number: PCT/JP2020/041136
(87) International publication number: WO 2021/131329

(57) **Abstract**

An operation unit-side key (K20) and a body unit-side key (K30) are set for each apparatus, and set to be different for each apparatus. An operation unit-side code generation unit (25) generates an operation unit-side tampering detection code based on specific information that is information for a specific apparatus and the operation unit-side key (K20) that corresponds to the specific apparatus. A body unit-side code generation unit (65) generates a body unit-side tampering detection code based on the specific information received from an operation unit (20) and the body unit-side key (K30) that corresponds to the specific apparatus. A tampering detection unit (67) detects tampering with the specific information by determining whether the operation unit-side tampering detection code matches the body unit-side tampering detection code.

## Description

### Technical Field

The present invention relates to a tampered-with apparatus specifying system, a tampered-with apparatus specifying program, and a tampered-with apparatus specifying method that specify a tampered-with apparatus.

### Background Art

For example, Patent Literature 1 and the like describe a device capable of detecting unauthorized accesses to work machines.

There is a case where a work machine is operated on operation information. This operation information includes a plurality of pieces of information for a plurality of apparatuses. It is assumed that at least any of the plurality of pieces of information for the plurality of apparatuses is tampered. At that time, it is desired to be able to specify as to which apparatus the information has been tampered with among the plurality of pieces of information for the plurality of apparatuses.

### Citation List

### Patent Literature

Patent Literature 1: JP 2019-82928 A

### Summary of Invention

Therefore, an object of the present invention is to provide a tampered-with apparatus specifying system, a tampered-with apparatus specifying program, and a tampered-with apparatus specifying method capable of specifying as to which apparatus information has been tampered with among a plurality of apparatuses.

### Means for Solving the Problems

A tampered-with apparatus specifying system according to an aspect of the present invention includes: an operation unit that transmits operation information, which is information for operating a plurality of apparatuses; and a body unit that is a body portion included in at least one work machine and receives the operation information, in which the operation unit includes an operation unit-side key holding unit that holds a plurality of operation unit-side keys, and an operation unit-side code generation unit, the body unit includes the plurality of apparatuses operated based on the operation information, a body unit-side key holding unit that holds a plurality of body unit-side keys, a body unit-side code generation unit, and a tampering detection unit, the plurality of operation unit-side keys and the plurality of body unit-side keys are each set to correspond to the plurality of apparatuses, and set to be different from one another for each of the plurality of apparatuses, the operation unit-side code generation unit generates an operation unit-side tampering detection code based on specific information that is information included in the operation information and is information corresponding to a specific apparatus that is one or more apparatuses among the plurality of apparatuses, and the operation unit-side key that corresponds to the specific apparatus among the plurality of operation unit-side keys, the operation unit transmits the operation unit-side tampering detection code and the operation information to the body unit, the body unit-side code generation unit generates a body unit-side tampering detection code based on the specific information received from the operation unit and the body unit-side key that corresponds to the specific apparatus among the plurality of body unit-side keys, and the tampering detection unit detects tampering with the specific information by determining whether the operation unit-side tampering detection code matches the body unit-side tampering detection code.

### Brief Description of Drawings

FIG. 1 is a view illustrating tampered-with apparatus specifying systems 1 and 401 according to a first embodiment and a fourth embodiment, respectively.
FIG. 2 is a view illustrating a first example of a display screen of a notification output unit 80 illustrated in FIG. 1.
FIG. 3 is a view illustrating a second example of a display screen of the notification output unit 80 illustrated in FIG. 1.
FIG. 4 is a view illustrating a configuration of operation information generated by an operation unit 20 illustrated in FIG. 1.
FIG. 5 is a flowchart illustrating an actuation of a body unit 30 illustrated in FIG. 1.
FIG. 6 is a flowchart illustrating an actuation of a server 70 illustrated in FIG. 1.
FIG. 7 is a view illustrating a tampered-with apparatus specifying system 201 of a second embodiment.
FIG. 8 is a view illustrating a tampered-with apparatus specifying system 301 of a third embodiment.
FIG. 9 is a view illustrating an example of a display screen of the notification output unit 80 of the tampered-with apparatus specifying system 401 of the fourth embodiment illustrated in FIG. 1.
FIG. 10 is a view illustrating a tampered-with apparatus specifying system 501 of a fifth embodiment.

### Description of Embodiments

### (First Embodiment)

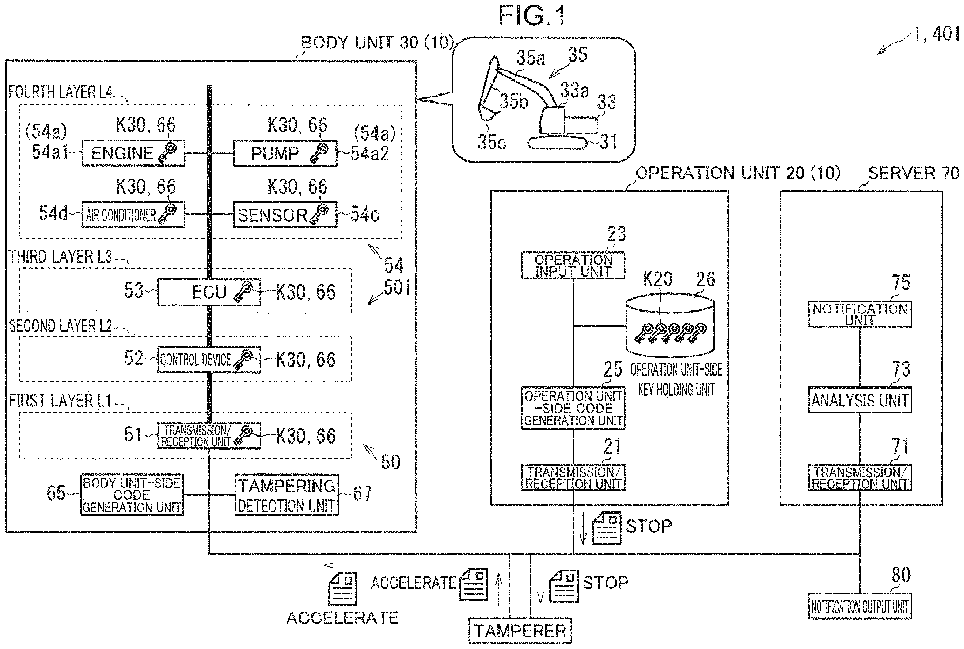

FIGS. 1 to 6 are views illustrating the tampered-with apparatus specifying system 1 of the first embodiment.

As illustrated in FIG. 1, the tampered-with apparatus specifying system I (attack occurrence place specifying system) is a system that detects tampering with information and specifies as to which apparatus the information has been tampered with (attacked). The tampered-with apparatus specifying system 1 includes a work machine 10 and the server 70 (computer).

The work machine 10 is a machine that performs work, for example, a construction machine that performs construction work, and may be, for example, an excavator or a crane. Hereinafter, a case where the work machine 10 is an excavator will be described. The work machine 10 includes the operation unit 20 (computer) and the body unit 30 (computer).

The operation unit 20 is a portion that operates the body unit 30. The operation unit 20 may be a remote operation terminal disposed at a position away from the body unit 30, or may be provided integrally with the body unit 30 (see the fifth embodiment). Hereinafter, a case where the operation unit 20 is a remote operation terminal will be described. The operation unit 20 includes a transmission/reception unit 21, an operation input unit 23, an operation unit-side code generation unit 25, and an operation unit-side key holding unit 26.

The transmission/reception unit 21 (information transmission/reception device) transmits and receives information. The transmission/reception unit 21 transmits operation information described later to the body unit 30 (transmission step). The transmission/reception unit 21 receives information necessary for remote operation from the body unit 30. The transmission/reception unit 21 is, for example, a modem or the like (the same applies to a transmission/reception unit 51 of the body unit 30 and a transmission/reception unit 71 of the server 70).

The operation input unit 23 (operation input device) is a portion to which operation information is input. The operation information input to the operation input unit 23 is information for operating the body unit 30, and may be, for example, an operation amount of lever operation or an operation state of switch operation. Details of the operation information will be described later.

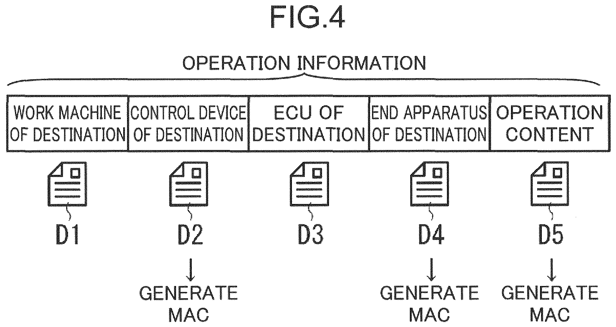

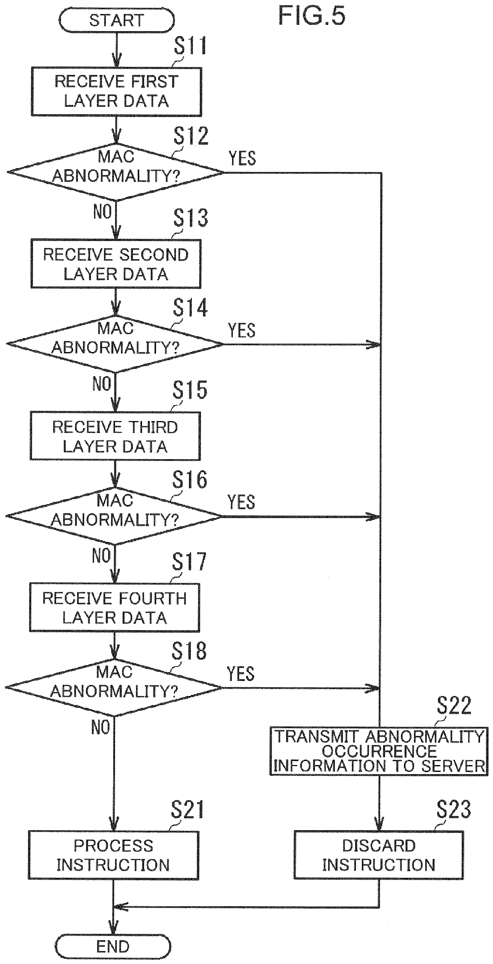

The operation unit-side code generation unit 25 generates (calculates) a tampering detection code based on at least part of operation information and an operation unit-side key K20 (key, key information) (operation unit-side code generation step). The tampering detection code is information for tampering detection. The tampering detection code generated by the operation unit-side code generation unit 25 is referred to as an operation unit-side tampering detection code. The tampering detection code may be, for example, a message authentication code (MAC). The message authentication code may be, for example, a hash-based message authentication code (HMAC) using hash values or a cipher-based message authentication code (CMAC) using a block cipher algorithm. The tampering detection code may be a code for error detection or error detection correction, and specifically, for example, may be a Reed-Solomon code (RS Code), a parity code, or the like. Note that in FIGS. 4 and 5, "MAC" is described as an example of the tampering detection code.

The operation unit-side key holding unit 26 holds (stores) the operation unit-side key K20 for generating an operation unit-side tampering detection code (operation unit-side key holding step) (details will be described later).

The body unit 30 is a body portion of the work machine 10. The body unit 30 receives the operation information transmitted by the operation unit 20. The body unit 30 includes a lower travelling body 31, an upper slewing body 33, an attachment 35, an apparatus group 50, a body unit-side code generation unit 65, a body unit-side key holding unit 66, and a tampering detection unit 67.

The lower travelling body 31 causes the body unit 30 to travel. The lower travelling body 31 includes, for example, a crawler. The upper slewing body 33 is slewably mounted on the lower travelling body 31. The upper slewing body 33 includes a driver's cab 33a. In the present embodiment, the operator performs an operation using the operation unit 20, which is a remote operation terminal, but can also perform an operation in the driver's cab 33a. The attachment 35 is a portion that performs work, and includes, for example, a boom 35a, an arm 35b, and a tip attachment 35c. The boom 35a is attached to the upper slewing body 33 so as to be raised and lowered. The arm 35b is rotatably attached to the boom 35a. The tip attachment 35c is provided at the tip of the attachment 35 and is rotatably attached to the arm 35b. The tip attachment 35c may be, for example, a bucket for scooping earth and sand, a device (grapple or the like) for pinching an object, or a device (breaker or the like) for crushing, excavating, or the like.

The apparatus group 50 includes a plurality of apparatuses. Each apparatus in the apparatus group 50 is operated based on operation information, electrically operated, and electrically controlled. Each apparatus in the apparatus group 50 is electrically connected to one another (connected to an in-vehicle network). Each apparatus in the apparatus group 50 can communicate by, for example, a controller area network (CAN).

This apparatus group 50 includes an information apparatus 50i (a transmission/reception unit 51, a control device 52, and an in-vehicle computer 53) and an end apparatus 54. Each apparatus in the apparatus group 50 belongs to any of a plurality of layers (L1 to L4). In the apparatus group 50, the operation information is passed in an order of the transmission/reception unit 51 (first layer L1), the control device 52 (second layer L2), the in-vehicle computer 53 (third layer L3), and the end apparatus 54 (fourth layer L4) from the upstream side to the downstream side. Note that the number of layers (L1 to L4) does not need to be four, and may be three or less or five or more.

The information apparatus 50i is an apparatus that processes operation information transmitted to the end apparatus 54 on the upstream side of the end apparatus 54. The information apparatus 50i includes, for example, the transmission/reception unit 51, the control device 52, and the in-vehicle computer 53.

The transmission/reception unit 51 (information transmission/reception device) transmits and receives information. The transmission/reception unit 51 receives operation information from the operation unit 20. When tampering with the operation information is detected, the transmission/reception unit 51 transmits abnormality occurrence information described later to the server 70.

The control device 52 is a device that controls (manages) the in-vehicle computer 53. The in-vehicle computer 53 controls the end apparatus 54. The in-vehicle computer 53 is an in-vehicle electronic control unit (ECU). Note that in FIG. 1 and the like, the in-vehicle computer 53 is described as an ECU.

The end apparatus 54 is provided on the most downstream side (terminal side) in a path of operation information. The end apparatus 54 is an apparatus belonging to the most downstream layer (e.g., the fourth layer L4) among the plurality of layers (L1 to L4). The end apparatus 54 includes, for example, an actuator 54a, a sensor 54c, and an air conditioner 54d (air-con in FIG. 1) and the like.

The actuator 54a physically actuates the body unit 30. Specifically, the actuator 54a performs an actuation related to at least any of travelling of the lower travelling body 31, slewing of the upper slewing body 33 with respect to the lower travelling body 31, and an actuation of the attachment 35. The actuator 54a includes, for example, an engine 54a1 and a pump 54a2. The engine 54a1 is a drive source of the body unit 30. The pump 54a2 is driven by the engine 54a1 and discharges hydraulic oil. The capacity of the pump 54a2 may be fixed or variable. Specifically, for example, the flow rate of the hydraulic oil discharged from the pump 54a2 may be controlled by a regulator controlling the capacity of the pump 54a2. The actuator 54a may include a control valve for controlling the flow rate, direction, and the like of the hydraulic oil. The actuator 54a may include a valve for controlling a control valve (e.g., a valve for controlling a pilot oil pressure). When this control valve is controlled, the direction and flow rate of the hydraulic oil supplied from the pump 54a2 to an hydraulic actuator (not illustrated) are controlled, and the actuations of the lower travelling body 31, the upper slewing body 33, and the attachment 35 are controlled.

The sensor 54c detects various types of information. The sensor 54c may include, for example, a pressure sensor, a temperature sensor, an image sensor, and an audio sensor. The air conditioner 54d adjusts temperature and humidity in the operator's cab 33a.

The body unit-side code generation unit 65 generates a tampering detection code based on at least part of operation information and a body unit-side key K30 (key, key information) (body unit-side code generation step) (for a specific example of the tampering detection code, refer to the description of the operation unit-side code generation unit 25). The tampering detection code generated by the body unit-side code generation unit 65 is referred to as a body unit-side tampering detection code.

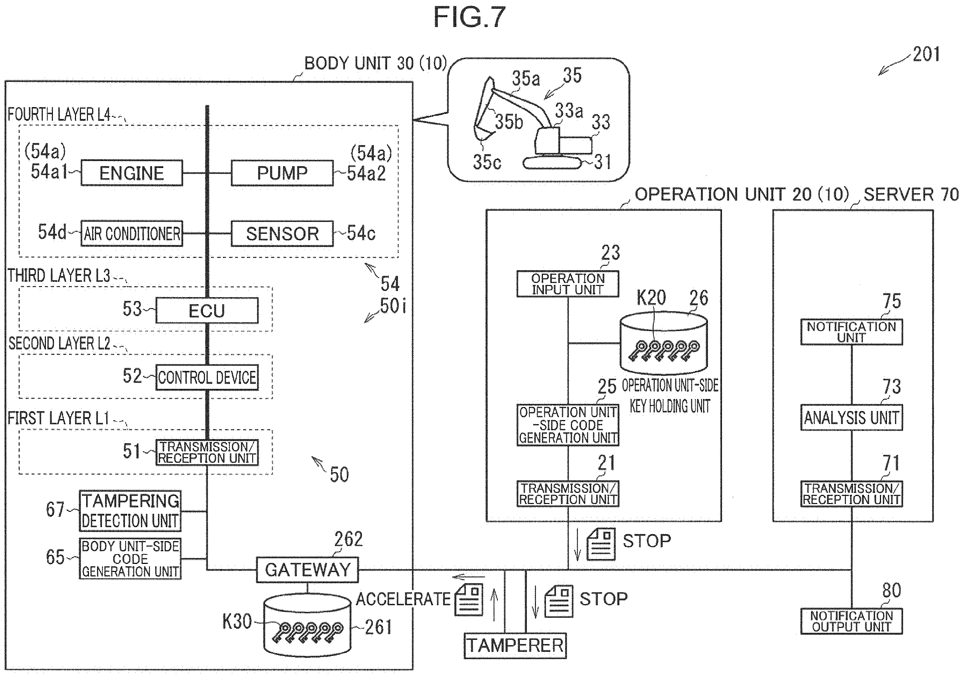

The body unit-side key holding unit 66 holds (stores) the body unit-side key K30 for generating a tampering detection code (body unit-side key holding step). The body unit-side key holding unit 66 may be a storage device (memory) mounted on each apparatus in the apparatus group 50 or may be a storage device provided at a position different from each apparatus (see a body unit-side key holding unit 261 in FIG. 7). The body unit-side key K30 is set for each apparatus, and set to be different for each apparatus. Specifically, the body unit-side key K30 corresponding to the transmission/reception unit 51, the body unit-side key K30 corresponding to the control device 52, and the body unit-side key K30 corresponding to the in-vehicle computer 53 are set to be different from one another. The body unit-side keys K30 corresponding to the end apparatuses 54 are set to be different from one another. More specifically, the body unit-side key K30 corresponding to the engine 54a1, the body unit-side key K30 corresponding to the pump 54a2, the body unit-side key K30 corresponding to the sensor 54c, and the body unit-side key K30 corresponding to the air conditioner 54d are set to be different from one another. Similarly to the body unit-side key K30, the operation unit-side key K20 is set for each apparatus, and set to be different for each apparatus. The body unit-side key K30 corresponding to a certain apparatus (e.g., the engine 54a1) and the operation unit-side key K20 corresponding to this apparatus (here, the engine 54a1) are the same.

The tampering detection unit 67 detects tampering with operation information (tampering detection step). The tampering detection unit 67 detects tampering with the operation information by comparing the operation unit-side tampering detection code and the body unit-side tampering detection code (details will be described later).

The server 70 is a computer that performs information processing. The server 70 is provided separately from the work machine 10. The server 70 is, for example, a world wide web (web) server. The server 70 includes the transmission/reception unit 71, an analysis unit 73, and a notification unit 75.

The transmission/reception unit 71 (information transmission/reception device) transmits and receives information. When the tampering detection unit 67 detects tampering with the operation information, the transmission/reception unit 71 receives abnormality occurrence information described later. The transmission/reception unit 71 transmits, to the notification output unit 80, the information (notification) output by the notification unit 75.

The analysis unit 73 (information analysis device) analyzes the abnormality occurrence information received by the server 70. Specifically, the analysis unit 73 acquires information indicating which apparatus in the apparatus group 50 is a tampered-with apparatus (described later). The analysis unit 73 outputs the acquired information to the notification unit 75.

When the tampering detection unit 67 detects tampering with the specific information (tampered-with information, described later), the notification unit 75 (information notification device, information display device) generates notification indicating that the operation information of the tampered-with apparatus has been tampered based on the information input from the analysis unit 73. The notification generated by the notification unit 75 may be notification by voice or notification by display (a specific example will be described later). The notification generated by the notification unit 75 is transmitted to the notification output unit 80.

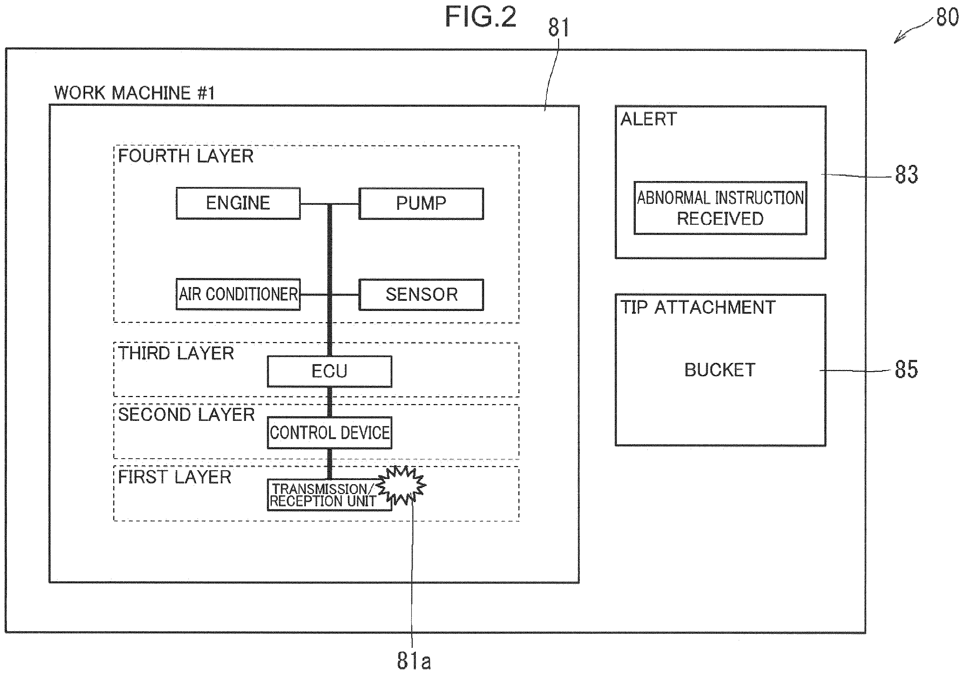

The notification output unit 80 actually (physically as a display or voice) outputs the notification generated in the notification unit 75. The notification output unit 80 is a monitor or a speaker capable of outputting a web page, for example. The notification output unit 80 may be provided in the operation unit 20 (in the remote operation terminal or the driver's cab 33a) or may be provided at a position different from the work machine 10. The person who receives the output of the notification output unit 80 (the notification of the notification unit 75) may be an operator of the work machine 10, an administrator of the work machine 10, or a repair person (service person) of the work machine 10. As illustrated in FIG. 2, the notification output unit 80 includes, for example, a tampered-with apparatus display unit 81, an alert display unit 83, and a tip attachment display unit 85.

The tampered-with apparatus display unit 81 displays the tampered-with apparatus. The alert display unit 83 displays, together with the characters "alert", that the information has been tampered. The tip attachment display unit 85 displays, together with the characters "tip attach", the type (e.g., bucket, breaker, or the like) of the tip attachment 35c when the tampering detection unit 67 detects tampering with the operation information. Details of the tampered-with apparatus display unit 81, the alert display unit 83, and the tip attachment display unit 85 will be described later.

### (Actuation)

The tampered-with apparatus specifying system 1 illustrated in FIG. 1 is configured to be actuated as follows.

### (Actuation of operation unit 20)

The actuation of the operation unit 20 is as follows. Operation information is input to the operation input unit 23. This operation information is information for operating the body unit 30 (instruction data, operation command). The operation information includes information necessary for operating (controlling) the end apparatus 54. Specifically, for example, the operation information includes information indicating what operation content for which end apparatus 54 under control of which in-vehicle computer 53 connected to which control device 52 of which work machine 10 (see FIG. 4).

Specifically, for example, the operation information includes information (D1 to D5 (see FIG. 4)) for the apparatus in the respective layers (L1 to L4) in the order of the first layer L1 to the fourth layer L4. In the example illustrated in FIG. 4, the head side (left side in FIG. 4) of the operation information is information for the apparatus on the upstream side (the first layer L1 side illustrated in FIG. 1), and the tail side (right side in FIG. 4) of the operation information is information for the apparatus on the downstream side (the fourth layer L4 side illustrated in FIG. 1). More specifically, the first information D1 is information for designating the apparatus in the first layer L1 illustrated in FIG. 1, and specifically, information for designating the transmission/reception unit 51 (work machine 10) of the destination. The second information D2 (see FIG. 4) is information for designating the apparatus in the second layer L2, and specifically, is information for designating the control device 52 of the destination. The third information D3 (see FIG. 4) is information for designating the apparatus in the third layer L3, and specifically, is information for designating the in-vehicle computer 53 of the destination. The fourth information D4 (see FIG. 4) is information for designating the apparatus in the fourth layer L4, and specifically, is information for designating the end apparatus 54 of the destination. The fifth information D5 (see FIG. 4) is information for designating the operation content of the apparatus in the fourth layer L4, and specifically, is information for designating the operation content of the end apparatus 54. The fifth information D5 (see FIG. 4) may be information for designating the rotation speed of the engine 54a1 or information for designating the capacity of the pump 54a2. The fifth information D5 may be information for designating the opening degree of the valve for actuating (e.g., accelerating or decelerating in a certain direction) any of the lower travelling body 31, the upper slewing body 33, and the attachment 35.

Next, the operation unit-side code generation unit 25 generates an operation unit-side tampering detection code based on the specific information described later and the operation unit-side key K20 held in the operation unit-side key holding unit 26. Here, normally, one tampering detection code is generated for one entire data. In this case, it can be determined that some part of the entire data has been tampered with, but it cannot be determined as to which part of the entire data has been tampered with. Therefore, in the present embodiment, the operation unit-side code generation unit 25 generates the tampering detection code as follows.

One or more apparatuses selected from the apparatus group 50 are referred to as "specific apparatus" (e.g., the control device 52). Information (in this example, the second information D2 (see FIG. 4)) included in the operation information and for the specific apparatus (in this example, the control device 52) is referred to as "specific information". At this time, the operation unit-side code generation unit 25 extracts the operation unit-side key K20 corresponding to the specific apparatus (the control device 52 in this example) from among the plurality of operation unit-side keys K20 held in the operation unit-side key holding unit 26. Then, the operation unit-side code generation unit 25 generates an operation unit-side tampering detection code based on the specific information (in this example, the second information D2 (see FIG. 4)) for the specific apparatus and the operation unit-side key K20 corresponding to the specific apparatus.

The operation unit-side code generation unit 25 may generate the operation unit-side tampering detection code for all the plurality of pieces of information (D1 to D5 (see FIG. 4)) included in the operation information. Hereinafter, the first information D1 to the fifth information D5 will be described with reference to FIG. 4. The operation unit-side code generation unit 25 may generate the operation unit-side tampering detection code for only some of the plurality of pieces of information (D1 to D5). In a case where the operation unit-side tampering detection code is generated only for some of the plurality of pieces of information (D1 to D5), it is possible to reduce the calculation amount for generating the operation unit-side tampering detection code by the operation unit-side code generation unit 25. For example, among the plurality of pieces of information (D1 to D5) included in the operation information, information for which tampering is particularly desired to be detected is selected as the specific information. As to which information among the plurality of pieces of information (D1 to D5) included in the operation information is the specific information may be set in advance in, for example, the operation unit-side code generation unit 25 or the like, or may be changed according to various conditions.

Next, the transmission/reception unit 21 of the operation unit 20 transmits the operation unit-side tampering detection code and the operation information to the body unit 30. In the example illustrated in FIG. 1, the operation information is information for stopping the actuation of a component (e.g., the lower travelling body 31) of the body unit 30 (described as "stop" in FIG. 1).

### (Tamperer)

There is a case where the operation information transmitted from the operation unit 20 to the body unit 30 is tampered by a tamperer (someone who maliciously relays, or attacker). Specifically, for example, it is assumed that the tamperer tampers with the operation information for stopping the actuation of a component (e.g., the lower travelling body 31) of the body unit 30 into the operation information for accelerating this component. If the operation information is tampered, the body unit 30 is likely to perform an operation (abnormal operation) different from the operation in response to the operation performed by the operation unit 20.

### (Actuation of body unit 30)

Actuation of the body unit 30 is as follows. FIG. 5 is a flowchart illustrating the actuation of the body unit 30 in a case where the operation unit-side tampering detection code is generated for all of the plurality of pieces of information (D1 to D5 (see FIG. 4)) included in the operation information.

The transmission/reception unit 51 of the body unit 30 receives an operation unit-side tampering detection code and operation information from the operation unit 20. The body unit 30 may receive all of the plurality of pieces of information (D1 to D5) included in the operation information at a time. As in the example illustrated in FIG. 5, the body unit 30 may receive a plurality of pieces of information (D1 to D5) included in the operation information one by one for each layer (L1 to L5 (see FIG. 1)) corresponding to the pieces of information (D1 to D5) (Steps S11, S13, S15, and S17).

The body unit-side code generation unit 65 illustrated in FIG. 1 generates a body unit-side tampering detection code based on the specific information received from the operation unit 20 and the body unit-side key K30 that corresponds to the specific apparatus. At this time, the body unit-side code generation unit 65 generates the body unit-side tampering detection code based on the body unit-side key K30 corresponding to the specific apparatus and the specific information (at least any of D1 to D5) for the specific apparatus. Specifically, for example, when the operation unit-side code generation unit 25 generates an operation unit-side tampering detection code corresponding to the control device 52, the body unit-side code generation unit 65 also generates a body unit-side tampering detection code corresponding to the control device 52.

Next, the tampering detection unit 67 detects the presence or absence of tampering with the operation information. The tampering detection unit 67 determines whether the operation unit-side tampering detection code received by the body unit 30 and the body unit-side tampering detection code generated by the body unit-side code generation unit 65 match. By this determination, it is determined whether the specific information (at least any of D1 to D5) for the specific apparatus has been tampered with. In a case where there are a plurality of operation unit-side tampering detection codes and a plurality of body unit-side tampering detection codes, the tampering detection unit 67 determines each of the plurality of tampering detection codes (Steps S12, S14, S16, and S18 illustrated in FIG. 5). Specifically, for example, when the operation unit-side code generation unit 25 generates an operation unit-side tampering detection code corresponding to the control device 52, the tampering detection unit 67 compares the operation unit-side tampering detection code with the body unit-side tampering detection code, corresponding to the control device 52.

In the example illustrated in FIG. 5, in step S11, the transmission/reception unit 51 receives the first information D1 of the first layer L1. In step S12, the body unit-side code generation unit 65 generates the body unit-side tampering detection code based on the first information D1, and the tampering detection unit 67 detects the presence or absence of tampering with the first information D1. Next, in step S13, the transmission/reception unit 51 receives the second information D2 of the second layer L2. In step S14, the body unit-side code generation unit 65 generates the body unit-side tampering detection code based on the second information D2, and the tampering detection unit 67 detects the presence or absence of tampering with the second information D2. Next, in step S15, the transmission/reception unit 51 receives the third information D3 of the third layer L3. In step S16, the body unit-side code generation unit 65 generates the body unit-side tampering detection code based on the third information D3, and the tampering detection unit 67 detects the presence or absence of tampering with the third information D3. Next, in step S17, the transmission/reception unit 51 receives the fourth information D4 of the fourth layer L4 and the fifth information D5. In step S18, the body unit-side code generation unit 65 generates the body unit-side tampering detection code based on the fourth information D4 and the fifth information D5, and the tampering detection unit 67 detects the presence or absence of tampering with the fourth information D4 and the fifth information D5.

When the operation unit-side tampering detection code and the body unit-side tampering detection code corresponding to a certain specific apparatus match each other, the tampering detection unit 67 determines that the information (at least any of D1 to D5) for this specific apparatus has not been tampered with. When the tampering detection unit 67 has not detected tampering for all the pieces of specific information, the body unit 30 is operated (instruction processing is performed) based on the operation information (step S21 illustrated in FIG. 5).

When the operation unit-side tampering detection code and the body unit-side tampering detection code corresponding to a specific apparatus do not match (in a case of "MAC abnormality" in FIG. 5), the tampering detection unit 67 determines that the information (at least any of D1 to D5) for this specific apparatus has been tampered with. In this case, this specific apparatus (the specific apparatus corresponding to the specific information with which the tampering detection code does not match) is the tampered-with apparatus (tamper occurrence place, attack occurrence place, and abnormality detection place) to be tampered with. Specifically, for example, when the operation unit-side tampering detection code and the body unit-side tampering detection code corresponding to the control device 52 do not match, the tampering detection unit 67 detects that the information (the second information D2) for the control device 52 has been tampered with. In this case, the tampered-with apparatus is the control device 52. For example, when the operation unit-side tampering detection code and the body unit-side tampering detection code corresponding to the engine 54a1 do not match, the tampering detection unit 67 detects that the information (the fourth information D4 or the fifth information D5) for the engine 54a1 has been tampered with. In this case, the tampered-with apparatus is the engine 54a1. The specific information (at least any of D1 to D5) to be tampered with is also referred to as tampered-with information.

When the tampering detection unit 67 detects tampering, the transmission/reception unit 51 transmits abnormality occurrence information (notification information) to the server 70 (step S22 illustrated in FIG. 5). This abnormality occurrence information includes information notifying that the operation information has been tampered with. The abnormality occurrence information includes information on the tampered-with apparatus, and specifically includes information as to which apparatus the tampered-with apparatus is. The abnormality occurrence information may include information on the type (bucket, breaker, etc) of the tip attachment 35c when tampering is detected, for example. The operation information including tampered information is discarded (step S23 illustrated in FIG. 5).

### (Actuation of server 70)

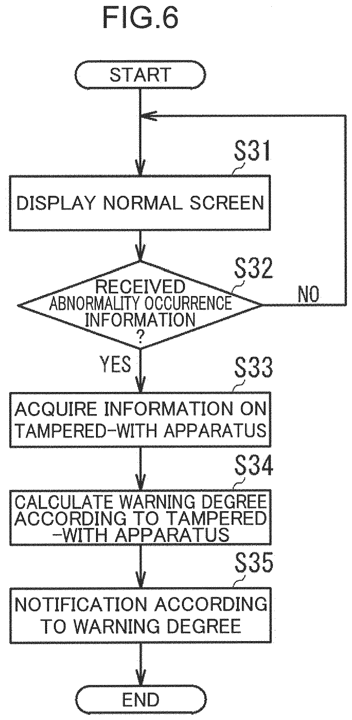

The actuation of the server 70 is as follows. FIG. 6 is a flowchart illustrating the actuation of the server 70.

When the transmission/reception unit 71 of the server 70 illustrated in FIG. 1 has not received abnormality occurrence information from the body unit 30 (step S32: NO), the notification output unit 80 of the server 70 displays a normal screen (not illustrated) (step S31). When the transmission/reception unit 71 receives the abnormality occurrence information from the body unit 30 (step S32: YES), next, in step S33, the analysis unit 73 analyzes the abnormality occurrence information. Specifically, for example, the analysis unit 73 acquires information on the tampered-with apparatus, specifically, information indicating as to which apparatus the tampered-with apparatus is. The analysis unit 73 may acquire information on the type of the tip attachment 35c. The analysis unit 73 outputs the acquired information to the notification unit 75. In step S34, the notification unit 75 calculates a warning degree corresponding to the tampered-with apparatus based on the information input from the analysis unit 73.

In step S35, the notification unit 75 notifies that the operation information has been tampered with. More specifically, the notification unit 75 generates notification indicating that the operation information has been tampered with, and causes the notification output unit 80 to output this notification. Note that when the operation information has not been tampered with, the notification output unit 80 may display, for example, a normal screen (not illustrated) (step S31).

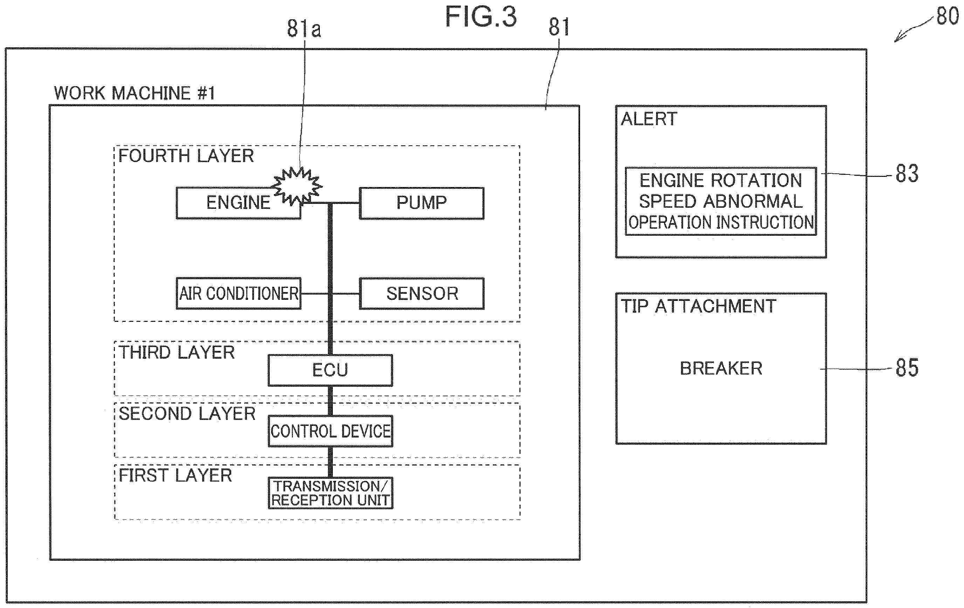

The notification unit 75 changes the content of notification depending on the tampered-with apparatus. The notification output unit 80 changes the content of output depending on the tampered-with apparatus. The notification output unit 80 outputs, for example, a character, a graphic, a symbol, or a combination of them. Specifically, as illustrated in FIGS. 2 and 3, the tampered-with apparatus display unit 81 outputs as to which apparatus the tampered-with apparatus is. In the example illustrated in the figures, in the vicinity of the display (characters of "transmission/reception unit" in FIG. 2 and characters of "engine" in FIG. 3) indicating the tampered-with apparatus, the tampered-with apparatus display unit 81 displays a graphic 81a indicating as to which apparatus the tampered-with apparatus is. As illustrated in FIG. 3, the alert display unit 83 may display, by characters, as to which apparatus the tampered-with apparatus is ("engine" in FIG. 3).

The notification unit 75 illustrated in FIG. 1 changes the content of notification depending on the content of the tampered information (any of D1 to D5). In the example illustrated in FIG. 2, the alert display unit 83 performs display indicating that the information (the first information D1 (see FIG. 4)) for the transmission/reception unit 51 (see FIG. 1) has been tampered with, and specifically, displays the characters of "alert" and "abnormal instruction received". In the example illustrated in FIG. 3, the alert display unit 83 performs display indicating that the information (the fifth information D5 (see FIG. 4)) for designating the rotation speed of the engine 54a1 has been tampered with, and specifically, displays the characters of "alert" and "engine rotation speed abnormal operation instruction".

The notification unit 75 illustrated in FIG. 1 notifies information regarding the tip attachment 35c when tampering is detected. Specifically, for example, as illustrated in FIGS. 2 and 3, the tip attachment display unit 85 displays the type of the tip attachment 35c (see FIG. 1). The tip attachment display unit 85 displays the characters "tip attach" and "bucket" in the example illustrated in FIG. 2, and displays the characters "tip attach" and "breaker" in the example illustrated in FIG. 3. Since the type of the tip attachment 35c illustrated in FIG. 1 is notified in this manner, it is possible to provide a person who receives the notification with a material for considering and predicting what kind of damage may occur due to tampering with the operation information. Note that the notification output unit 80 may output what kind of damage may occur due to tampering with the operation information.

The notification unit 75 changes the content of the notification depending on the warning degree. The warning degree is set based on the magnitude of the influence (such as damage) of the tampering with the operation information on the operation of the apparatus. The warning degree is calculated by the notification unit 75, for example. The warning degree is calculated and set as follows, for example.

[Warning Degree Example A] The warning degree is set based on as to which apparatus the tampered-with apparatus is. [Warning Degree Example A1] For example, when information for the end apparatus 54 (at least any of the fourth information D4 and the fifth information D5 illustrated in FIG. 4) is tampered with, there is a high possibility that the physical operation (in other words, actual operation, work operation of the work machine 10, and the like) of the body unit 30 is affected. On the other hand, when information (the first information D1, the second information D2, or the third information D3 illustrated in FIG. 4) for the information apparatus 50i is tampered with, there is a case where the physical operation of the body unit 30 is not affected. Therefore, the warning degree may be set higher when the tampered-with apparatus is the end apparatus 54 than that when the tampered-with apparatus is the information apparatus 50i.

[Warning Degree Example A2] When information for an apparatus on the downstream side (on the fourth layer L4 side) is tampered with, there is a higher possibility that the physical operation of the body unit 30 is affected than that when information for an apparatus on the upstream side (on the first layer L1 side) is tampered with. Therefore, the warning degree may be set higher when the tampered-with apparatus is an apparatus on the downstream side (the fourth layer L4 side) than that when the tampered-with apparatus is an apparatus on the upstream side (the first layer L1 side). Specifically, in a case where the layer to which the tampered-with apparatus belongs is the first layer L1 (minimum warning degree), the warning degree may be set to become higher in ascending order of a case of the second layer L2, a case of the third layer L3, and a case of the fourth layer L4 (maximum warning degree).

[Warning Degree Example A3] The warning degree may be changed based on as to which end apparatus 54 the tampered-with apparatus is. For example, if information for the actuator 54a directly involved in travelling of the lower travelling body 31, slewing of the upper slewing body 33, and actuation of the attachment 35 has been tampered with, the physical operation of the body unit 30 is affected, and the work of the work machine 10 is affected. On the other hand, if information for the end apparatus 54 (the air conditioner 54d or the like) other than the actuator 54a has been tampered with, there is a case where the work of the work machine 10 is not directly affected. Therefore, the warning degree may be set higher when the tampered-with apparatus is the actuator 54a than that when the tampered-with apparatus is not the actuator 54a (the end apparatus 54 other than the actuator 54a or the information apparatus 50i).

[Warning Degree Example A4] The warning degree may be changed based on as to which actuator 54a the tampered-with apparatus is.

[Warning Degree Example B] The warning degree may be changed based on the type of the tip attachment 35c when tampering is detected. The warning degree may be changed based on a combination of the type of the tip attachment 35c and the tampered-with apparatus.

The notification unit 75 changes the content of notification depending on the warning degree as follows, for example. The notification unit 75 changes the content of display on the notification output unit 80 illustrated in FIGS. 2 and 3 depending on the warning degree. Specifically, the notification output unit 80 may change the display color (e.g., the background color of the alert display unit 83 or the tip attachment display unit 85) depending on the warning degree. For example, the display color in the notification output unit 80 may be set to a color closer to blue as the warning degree is lower, a color closer to red as the warning degree is higher, and the like. The notification output unit 80 may change the size of characters (e.g., the size of characters displayed on the alert display unit 83 and the like) depending on the warning degree, and may change content indicated by characters. The notification output unit 80 may increase the amount of information to be notified as the warning degree is higher. The notification output unit 80 may change the volume of the sound to be output, may change the tone, and may change the content of the sound depending on the warning degree.

### (Second Embodiment)

With reference to FIG. 7, the tampered-with apparatus specifying system 201 of the second embodiment will be described in terms of differences from the first embodiment. Note that description of points of the tampered-with apparatus specifying system 201 that are common to those of the first embodiment will be omitted. Omission of description of common points is true for the other embodiments described later. The body unit 30 of the tampered-with apparatus specifying system 201 includes the body unit-side key holding unit 261 and a gateway 262.

In the example illustrated in FIG. 1, the body unit-side key holding unit 66 is provided in each apparatus in the apparatus group 50. On the other hand, as illustrated in FIG. 7, in the present embodiment, the body unit-side key holding unit 261 collectively holds (manages) the body unit-side keys K30 corresponding to a plurality of apparatuses. The body unit-side key holding unit 261 may hold collectively (together, in one place) the body unit-side keys K30 corresponding to all the apparatuses of the apparatus group 50, or may collectively hold the body unit-side keys K30 corresponding to some apparatuses included in the apparatus group 50.

The body unit-side key holding unit 261 may be provided, for example, in the gateway 262, may be provided separately from the gateway 262, may be connected to the gateway 262, or needs not be connected to the gateway 262. The gateway 262 is installed at a boundary portion of communication between inside and outside of the body unit 30. Similarly to the body unit-side key holding unit 261, at least any of the body unit-side code generation unit 65 and the tampering detection unit 67 may be provided in the gateway 262 or needs not be provided in the gateway 262.

### (Third Embodiment)

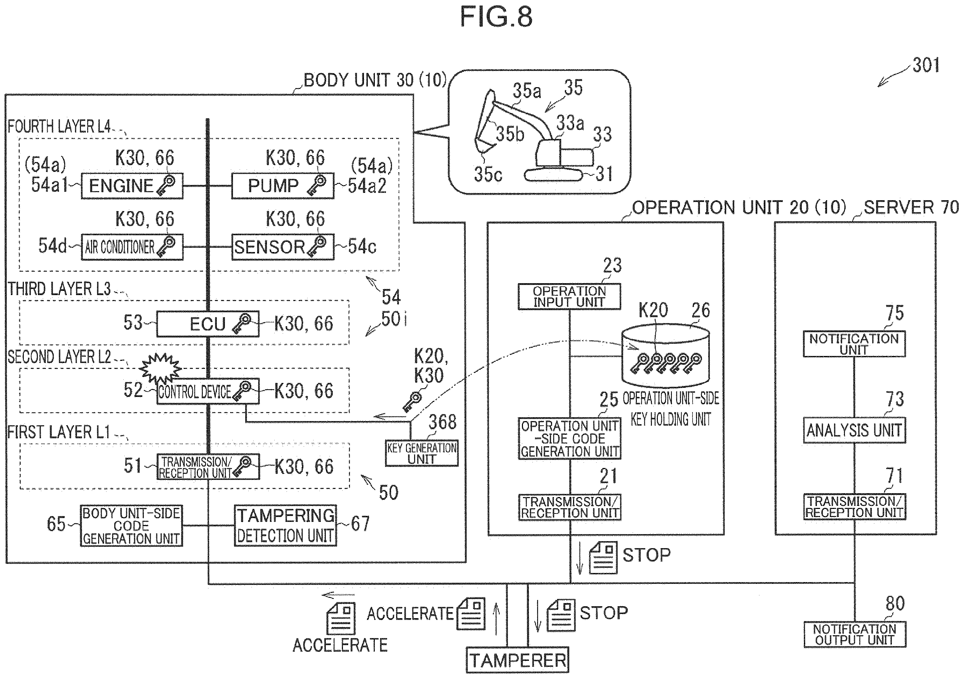

With reference to FIG. 8, the tampered-with apparatus specifying system 301 of the third embodiment will be described in terms of differences from the first embodiment. The tampered-with apparatus specifying system 301 includes a key generation unit 368.

The key generation unit 368 regenerates keys (the body unit-side key K30 and the operation unit-side key K20) at a predetermined replacement timing. The "predetermined replacement timing" described above may be, for example, a timing based on an expiry period of the key preset in the key generation unit 368 or the like, may be a periodic timing, or may be a timing as needed. The key generated by the key generation unit 368 is held in the body unit-side key holding unit 66 as the body unit-side key K30 (replaced with an old key). The key generated by the key generation unit 368 is held in the operation unit-side key holding unit 26 as the operation unit-side key K20.

When the tampering detection unit 67 detects tampering with the specific information (tampered-with information), this key generation unit 368 regenerates the keys (the body unit-side key K30 and the operation unit-side key K20) corresponding to the tampered-with apparatus. A problem may occur if the same key is continuously used in a case where the tampering detection unit 67 detects tampering with the specific information (tampered-with information). For example, there is a risk that fuzzing is performed to infer the key. Therefore, the key generation unit 368 newly generates (regenerates) a key regardless of the "predetermined replacement timing", thereby making it difficult to infer the key and improving security. The key generated by the key generation unit 368 is held in the body unit-side key holding unit 66 as the body unit-side key K30. The key generated by the key generation unit 368 is held in the operation unit-side key holding unit 26 as the operation unit-side key K20.

This key generation unit 368 may be provided in the body unit 30, may be provided in the operation unit 20, or may be provided in the server 70. When the key generation unit 368 is provided in the body unit 30, the key generated by the key generation unit 368 is delivered to the operation unit 20. When the key generation unit 368 is provided in the operation unit 20, the key generated by the key generation unit 368 is delivered to the body unit 30. When the key generation unit 368 is provided in the server 70, the key generated by the key generation unit 368 is delivered to the body unit 30 and the operation unit 20. The means for delivering the key generated by the key generation unit 368 may be, for example, transmission via the transmission/reception units 21, 51, and 71, and specifically, may be transmission via the Internet, a private network, or the like. The key generated by the key generation unit 368 may be delivered in a state of being stored in a storage medium. The storage medium storing the key may be a flash memory such as a universal serial bus (USB) memory or a solid state drive, or may be a magnetic disk such as a hard disk drive.

### (Fourth Embodiment)

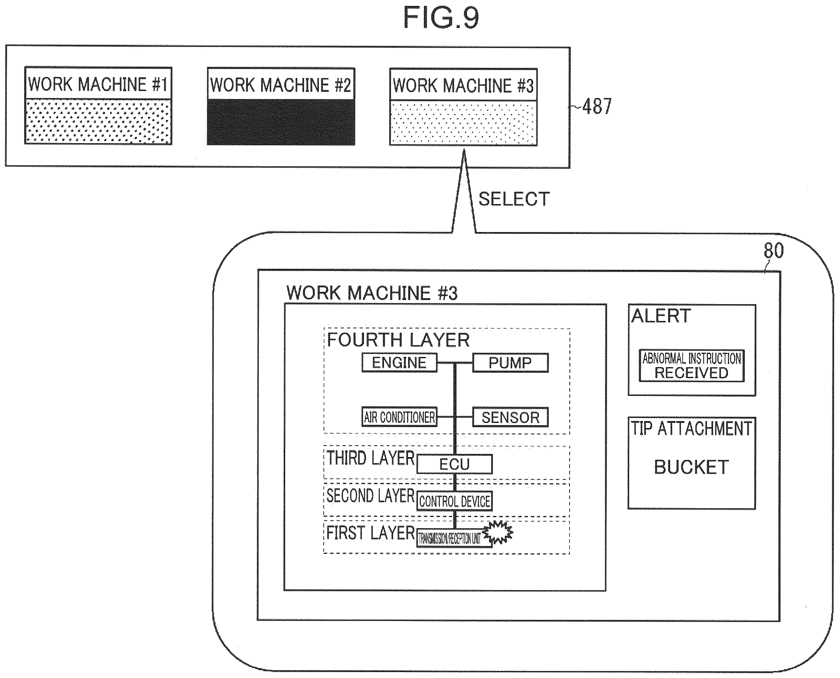

With reference to mainly FIG. 9, the tampered-with apparatus specifying system 401 (see FIG. 1) of the fourth embodiment will be described in terms of differences from the first embodiment.

The tampered-with apparatus specifying system 401 illustrated in FIG. 1 includes a plurality of the work machines 10 (only one is illustrated in FIG. 1). Each of the plurality of work machines 10 includes the body unit 30 and the operation unit 20. It is assumed that the tampering detection unit 67 detects tampering with operation information in each of the plurality of work machines 10. In this case, the notification unit 75 gives notification depending on the warning degree (severity of damage) for each of the plurality of work machines 10. This makes it possible to cause the person who receives the notification to easily judge as to which work machine 10 to take a countermeasure against tampering from (priority order of countermeasure) (so to speak, a triage system). Specifically, the notification output unit 80 that outputs the notification of the notification unit 75 includes a work machine display unit 487 as illustrated in FIG. 9. Hereinafter, the work machine 10 will be described with reference to FIG. 1.

The work machine display unit 487 performs display corresponding to the plurality of work machines 10. Specifically, for example, the work machine display unit 487 performs display (display by a character, a graphic, a symbol, or combination of them) that can distinguish the plurality of work machines 10. In the example illustrated in FIG. 9, the work machine display unit 487 performs display corresponding to the three work machines 10 of a "work machine #1", a "work machine #2", and a "work machine #3". The work machine display unit 487 changes the content of output of the notification depending on to the warning degrees of the plurality of work machines 10. For example, the work machine display unit 487 changes the display (e.g., color) corresponding to the work machine 10 depending on the warning degree of the work machine 10. More specifically, the work machine display unit 487 displays a color closer to blue as the warning degree is lower, a color closer to red as the warning degree is higher, black when countermeasure is impossible, and the like.

The display (display of characters, graphics, and the like) corresponding to the plurality of work machines 10 by the work machine display unit 487 functions as a button (tag) for changing the display of the notification output unit 80. For example, when the display corresponding to the plurality of work machines 10 is selected (e.g., click, touch, and the like), details of the notification related to the selected work machine 10 are displayed. This "details of the notification" is, for example, a display similar to the display of the notification output unit 80 illustrated in FIGS. 2 and 3. Note that the notification unit 75 may change the voice depending on the warning degrees of the plurality of work machines 10.

### (Fifth Embodiment)

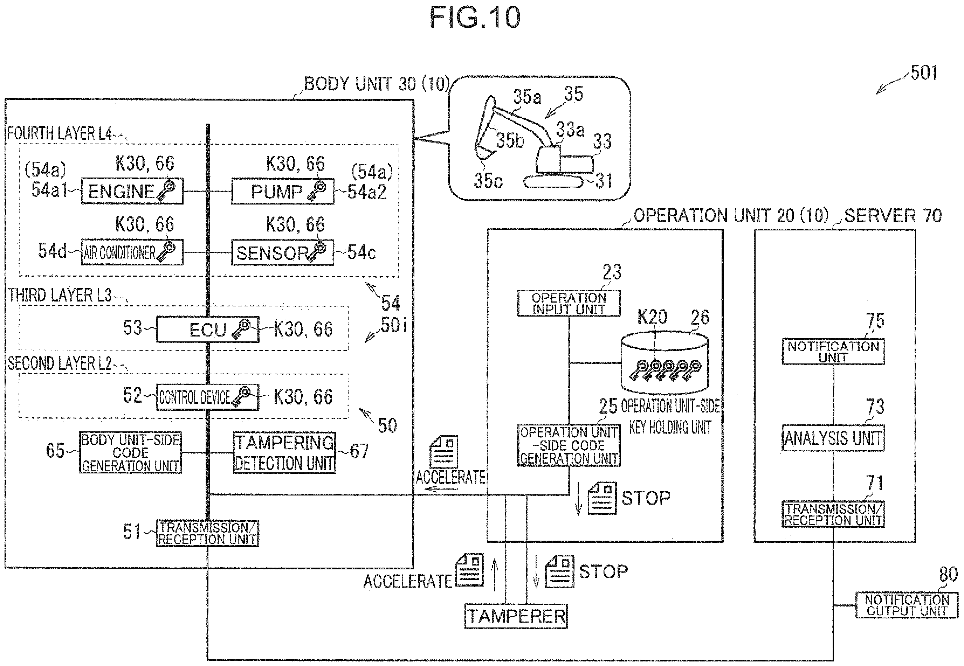

With reference to FIG. 10, the tampered-with apparatus specifying system 501 of the fifth embodiment will be described in terms of differences from the first embodiment.

In the example illustrated in FIG. 1, the operation unit 20 remotely operates the body unit 30 (remote operation terminal). On the other hand, as illustrated in FIG. 10, in the present embodiment, the operation unit 20 is provided integrally with the body unit 30, for example, provided inside the driver's cab 33a. For example, an electric signal (CAN signal or the like) output in response to an operation of an electric lever is input to the operation input unit 23. The transmission/reception unit 21 of the operation unit 20 illustrated in FIG. 1 is unnecessary in the present embodiment. The operation information output from the operation unit 20 illustrated in FIG. 10 is input to the control device 52 (the apparatus group 50) without passing through the transmission/reception unit 51 of the body unit 30. The tamperer may tamper with the operation information output from the operation unit 20 to the control device 52. For example, a device for tampering with information is sometimes attached to a terminal (terminal for electrical connection) between the operation unit 20 and the body unit 30. Note that the transmission/reception unit 51 (transmission unit) of the body unit 30 is used when abnormality occurrence information is transmitted to the server 70 in a case where the tampering detection unit 67 detects tampering.

### (Modifications)

The above embodiments may be variously modified. For example, components of embodiments different from one another may be combined. For example, the arrangement of each component may be changed. Specifically, the analysis unit 73 and the notification unit 75 illustrated in FIG. 1 need not be provided in the server 70, and may be provided in the body unit 30 or the operation unit 20. For example, connection of the circuit illustrated in FIG. 1 and the like may be changed. For example, the order of the steps in the flowcharts illustrated in FIGS. 5 and 6 may be changed, and some of the steps may be skipped. For example, the number of components may be changed, and some of the components need not be provided. For example, those described as a plurality of members or portions different from one another may be one member or portion. For example, those described as one member or portion may be provided separately in a plurality of different members or portions different from one another.

Features of the above-described embodiments are summarized as follows.

A tampered-with apparatus specifying system according to an aspect of the present invention includes: an operation unit that transmits operation information, which is information for operating a plurality of apparatuses; and a body unit that is a body portion included in at least one work machine and receives the operation information, in which the operation unit includes an operation unit-side key holding unit that holds a plurality of operation unit-side keys, and an operation unit-side code generation unit, the body unit includes the plurality of apparatuses operated based on the operation information, a body unit-side key holding unit that holds a plurality of body unit-side keys, a body unit-side code generation unit, and a tampering detection unit, the plurality of operation unit-side keys and the plurality of body unit-side keys are each set to correspond to the plurality of apparatuses, and set to be different from one another for each of the plurality of apparatuses, the operation unit-side code generation unit generates an operation unit-side tampering detection code based on specific information that is information included in the operation information and is information corresponding to a specific apparatus that is one or more apparatuses among the plurality of apparatuses, and the operation unit-side key that corresponds to the specific apparatus among the plurality of operation unit-side keys, the operation unit transmits the operation unit-side tampering detection code and the operation information to the body unit, the body unit-side code generation unit generates a body unit-side tampering detection code based on the specific information received from the operation unit and the body unit-side key that corresponds to the specific apparatus among the plurality of body unit-side keys, and the tampering detection unit detects tampering with the specific information by determining whether the operation unit-side tampering detection code matches the body unit-side tampering detection code.

The tampered-with apparatus specifying system includes the operation unit and the body unit. The operation unit transmits operation information. The body unit is a body portion of the work machine and receives operation information. The operation unit includes the operation unit-side key holding unit that holds an operation unit-side key, and the operation unit-side code generation unit. The operation unit-side code generation unit generates an operation unit-side tampering detection code based on at least part of the operation information and the operation unit-side key. The body unit includes the apparatus group, the body unit-side key holding unit that holds a body unit-side key, the body unit-side code generation unit, and the tampering detection unit. The apparatus group includes a plurality of apparatuses operated based on operation information. The body unit-side code generation unit generates a body unit-side tampering detection code based on at least part of the operation information and the body unit-side key. The tampering detection unit detects tampering with information.

[Configuration 1-1] The operation unit-side key and the body unit-side key are set for each apparatus, and set to be different for each apparatus.

[Configuration 1-2] The operation unit-side code generation unit generates an operation unit-side tampering detection code based on specific information and the operation unit-side key that corresponds to the specific apparatus. The specific information is information included in operation information and is information for a specific apparatus included in the apparatus group.

The operation unit transmits the operation unit-side tampering detection code and the operation information to the body unit.

[Configuration 1-3] The body unit-side code generation unit generates a body unit-side tampering detection code based on the specific information received from the operation unit and the body unit-side key that corresponds to the specific apparatus.

[Configuration 1-4] The tampering detection unit detects tampering with the specific information by determining whether the operation unit-side tampering detection code matches the body unit-side tampering detection code.

In [Configuration 1-1] and [Configuration 1-2] described above, the operation unit-side code generation unit generates an operation unit-side tampering detection code based on the specific information for the specific apparatus and the operation unit-side key that corresponds to the specific apparatus. Further, in [Configuration 1-1] and [Configuration 1-3] described above, the body unit-side code generation unit generates a body unit-side tampering detection code based on the specific information for the specific apparatus and the body unit-side key that corresponds to the specific apparatus. Then, the tampering detection unit detects tampering with the specific information by determining whether the operation unit-side tampering detection code matches the body unit-side tampering detection code ([Configuration 1-4] described above). Hence, tampering with the information for the specific information can be detected. This specific information is information for a specific apparatus included in the apparatus group ([Configuration 1-2] described above). Hence, the tampered-with apparatus specifying system can specify as to which apparatus (specific apparatus) the information has been tampered with among the apparatuses included in the apparatus group (a plurality of apparatuses). That is, the tampered-with apparatus specifying system can specify the tampered-with apparatus.

In [Configuration 1-1] to [Configuration 1-4] described above, a key (operation unit-side key, body unit-side key) for generating a tampering detection code is used to specify a tampered-with apparatus. Hence, even if each apparatus included in the apparatus group does not have network information such as an Internet protocol (IP) address, for example, the tampered-with apparatus specifying system can specify the tampered-with apparatus.

In the above aspect, the one or more specific apparatuses may include a plurality of specific apparatuses, the tampered-with apparatus specifying system may further include a notification unit that generates notification when the tampering detection unit detects tampering with the specific information, and the notification unit may change content of the notification depending on the specific apparatus corresponding to the specific information with which the tampering detection unit has detected tampering.

[Configuration 2] The tampered-with apparatus specifying system includes a notification unit. The notification unit generates notification when the tampering detection unit detects tampering with the specific information. The notification unit changes the content of notification depending on the specific apparatus corresponding to the specific information (tampered-with information) with which the tampering detection unit has detected tampering.

In [Configuration 2] described above, the content of notification by the notification unit is changed depending on the specific apparatus (tampered-with apparatus) corresponding to the tampered-with information. Hence, it is possible to notify the person who receives the notification from the notification unit of the information regarding the tampered-with apparatus (e.g., as to which apparatus the tampered-with apparatus is, for example, the degree of influence due to tampering, and the like).

In the above aspect, a warning degree is set for each of the plurality of apparatuses according to a magnitude of an influence of tampering with the operation information on an operation of the apparatus, and the notification unit changes content of the notification depending on the warning degree set in the specific apparatus corresponding to the specific information with which the tampering detection unit has detected tampering.

[Configuration 3] The notification unit changes the content of the notification depending on the warning degree set based on a magnitude of an influence of tampering with the operation information.

According to [Configuration 3] described above, it is possible to cause the person who receives the notification from the notification unit to easily grasp the magnitude of the influence due to the tampering with the operation information.

In the above aspect, the plurality of apparatuses may include an end apparatus provided on a most downstream side in a transmission path of the operation information in the body unit, and an information apparatus that processes the operation information to be transmitted to the end apparatus and outputs the operation information having been processed to the downstream side, and the warning degree set for the information apparatus may be higher than the warning degree set for the end apparatus.

The apparatus group includes the end apparatus and the information apparatus. The end apparatus is an apparatus provided on the endmost side in the path of operation information. The information apparatus is an apparatus that processes operation information to be transmitted to the end apparatus.

[Configuration 4] The warning degree is set higher when the specific apparatus (tampered-with apparatus) corresponding to the specific information (tampered-with information) with which the tampering detection unit has detected tampering is an end apparatus than that when the specific apparatus is an information apparatus.

It is assumed that influence of tampering when information for the end apparatus is tampered is larger than that when information for the information apparatus is tampered. Therefore, the tampered-with apparatus specifying system includes the above [Configuration 4]. Hence, the warning degree is appropriately set. As a result, it is possible to cause the person who receives the notification from the notification unit to appropriately grasp the magnitude of the influence due to the tampering with the operation information.

In the above aspect, the at least one work machine may include a plurality of work machines, and when the tampering detection unit included in each of the plurality of work machines detects tampering with the specific information, the notification unit may generate the notification corresponding to the warning degree for the work machine including the tampering detection unit that has detected tampering with the specific information.

[Configuration 5] When the tampering detection unit detects tampering in each of the plurality of work machines, the notification unit generates notification corresponding to the warning degree for each of the plurality of work machines.

According to the above [Configuration 5], it is possible to give notification depending on the warning degree for each work machine. As a result, for example, it is possible to cause the person who receives the notification to easily judge as to which work machine among the plurality of work machines to take a countermeasure against tampering from (priority order of countermeasure).

In the above aspect, the body unit-side key holding unit may collectively hold the plurality of body unit-side keys that correspond to the plurality of apparatuses.

[Configuration 6] The body unit-side key holding unit collectively holds the body unit-side keys that correspond to the plurality of apparatuses.

According to [Configuration 6] described above, it is not necessary to provide, for each apparatus in the apparatus group, a storage region (memory space) for holding the body unit-side key, regarding the body unit-side key held in the body unit-side key holding unit. Hence, it is possible to reduce the necessary capacity of the storage device provided in the apparatus of the apparatus group, or it is not necessary to provide the storage device in the apparatus of the apparatus group.

In the above aspect, the tampered-with apparatus specifying system may further include a key generation unit that newly generates the operation unit-side key and the body unit-side key that correspond to the specific apparatus corresponding to the specific information with which the tampering detection unit has detected tampering.

[Configuration 7] The tampered-with apparatus specifying system includes a key generation unit. The key generation unit newly generates the operation unit-side key and the body unit-side key that correspond to the specific apparatus (tampered-with apparatus) corresponding to the specific information (tampered-with information) with which the tampering detection unit has detected tampering.

According to [Configuration 7] described above, the operation unit-side key and the body unit-side key that corresponds to the tampered-with apparatus are newly generated (regenerated). Therefore, even after the tampering has been detected, the key can be hardly inferred as compared with a case where the key that corresponds to the tampered-with apparatus is continuously used as it is.

In the above aspect, the operation unit-side tampering detection code and the body unit-side tampering detection code are message authentication codes.

[Configuration 8] The tampering detection code is a message authentication code.

In [Configuration 8] described above, a message authentication code is used which is generally used as a code for detecting tampering with information. Therefore, software for generating and comparing message authentication codes used in a system or the like other than the tampered-with apparatus specifying system can be easily used in the tampered-with apparatus specifying system.

In the above aspect, the operation unit-side key that corresponds to one apparatus of the plurality of apparatuses may be identical to the body unit-side key that corresponds to the one apparatus.

A tampered-with apparatus specifying program according to an aspect of the present invention is a tampered-with apparatus specifying program used for a work machine including an operation unit that transmits operation information, which is information for operating a plurality of apparatuses, and a body unit that is a body portion included in at least one work machine, receives the operation information, and includes a plurality of apparatuses operated based on the operation information, the tampered-with apparatus specifying program causing a computer to execute: an operation unit-side key holding step of causing the operation unit to hold a plurality of operation unit-side keys; an operation unit-side code generation step; a transmission step of transmitting information from the operation unit to the body unit; a body unit-side key holding step of causing the body unit to hold a plurality of body unit-side keys; a body unit-side code generation step; and a tampering detection step, in which the plurality of operation unit-side keys and the plurality of body unit-side keys are each set to correspond to the plurality of apparatuses, and set to be different from one another for each of the plurality of apparatuses, in the operation unit-side code generation step, an operation unit-side tampering detection code is generated based on specific information that is information included in the operation information and is information corresponding to a specific apparatus that is one or more apparatuses among the plurality of apparatuses, and the operation unit-side key that corresponds to the specific apparatus among the plurality of operation unit-side keys, in the transmission step, the operation unit-side tampering detection code and the operation information are transmitted from the operation unit to the body unit, in the body unit-side code generation step, a body unit-side tampering detection code is generated based on the specific information received by the body unit from the operation unit and the body unit-side key that corresponds to the specific apparatus among the plurality of body unit-side keys, and in the tampering detection step, tampering with the specific information is detected by determining whether the operation unit-side tampering detection code matches the body unit-side tampering detection code.

The tampered-with apparatus specifying program of the present embodiment is used for a work machine. The work machine includes the operation unit and the body unit. The operation unit transmits operation information. The body unit is a body portion of the work machine, receives operation information, and has an apparatus group. The apparatus group includes a plurality of apparatuses operated based on operation information. The tampered-with apparatus specifying program causes a computer (operation unit, body unit) to execute the operation unit-side key holding step, the operation unit-side code generation step, the transmission step, the body unit-side key holding step, the body unit-side code generation step, and the tampering detection step.

[Configuration 9] In the operation unit-side key holding step, the operation unit (the operation unit-side key holding unit) is caused to hold an operation unit-side key. In the operation unit-side code generation step, an operation unit-side tampering detection code is generated based on at least part of the operation information and the operation unit-side key. In the transmission step, information is transmitted from the operation unit to the body unit. In the body unit-side key holding step, the body unit (body unit-side key holding unit) is caused to hold the body unit-side key. In the body unit-side code generation step, a body unit-side tampering detection code is generated based on at least part of the operation information and the body unit-side key. In the tampering detection step, tampering with information is detected. The operation unit-side key and the body unit-side key are set for each apparatus, and set to be different for each apparatus. In the operation unit-side code generation step, an operation unit-side tampering detection code is generated based on specific information that is information included in the operation information and is information for a specific apparatus included in an apparatus group, and the operation unit-side key that corresponds to the specific apparatus. In the transmission step, the operation unit-side tampering detection code and the operation information are transmitted from the operation unit to the body unit. In the body unit-side code generation step, a body unit-side tampering detection code is generated based on the specific information received by the body unit from the operation unit and the body unit-side key that corresponds to the specific apparatus. In the tampering detection step, tampering with the specific information is detected by determining whether the operation unit-side tampering detection code matches the body unit-side tampering detection code.

This tampered-with apparatus specifying program makes it possible to give an effect similar to that of the tampered-with apparatus specifying system.

A tampered-with apparatus specifying method according to an aspect of the present invention is a tampered-with apparatus specifying method used for a work machine including an operation unit that transmits operation information, which is information for operating a plurality of apparatuses, and a body unit that is a body portion included in at least one work machine, receives the operation information, and includes a plurality of apparatuses operated based on the operation information, the tampered-with apparatus specifying method including: an operation unit-side key holding step of causing the operation unit to hold a plurality of operation unit-side keys; an operation unit-side code generation step; a transmission step of transmitting information from the operation unit to the body unit; a body unit-side key holding step of causing the body unit to hold a plurality of body unit-side keys; a body unit-side code generation step; and a tampering detection step, in which the plurality of operation unit-side keys and the plurality of body unit-side keys are each set to correspond to the plurality of apparatuses, and set to be different from one another for each of the plurality of apparatuses, in the operation unit-side code generation step, an operation unit-side tampering detection code is generated based on specific information that is information included in the operation information and is information corresponding to a specific apparatus that is one or more apparatuses among the plurality of apparatuses, and the operation unit-side key that corresponds to the specific apparatus among the plurality of operation unit-side keys, in the transmission step, the operation unit-side tampering detection code and the operation information are transmitted from the operation unit to the body unit, in the body unit-side code generation step, a body unit-side tampering detection code is generated based on the specific information received by the body unit from the operation unit and the body unit-side key that corresponds to the specific apparatus among the plurality of body unit-side keys, and in the tampering detection step, tampering with the specific information is detected by determining whether the operation unit-side tampering detection code matches the body unit-side tampering detection code.

The tampered-with apparatus specifying method of the present embodiment is used for a work machine. The work machine includes the operation unit and the body unit. The operation unit transmits operation information. The body unit is a body portion of the work machine, receives operation information, and has an apparatus group. The apparatus group includes a plurality of apparatuses operated based on operation information. The tampered-with apparatus specifying method includes the operation unit-side key holding step, the operation unit-side code generation step, the transmission step, the body unit-side key holding step, the body unit-side code generation step, and the tampering detection step. The content of each step is similar to that of the above [Configuration 9].

This tampered-with apparatus specifying method makes it possible to give an effect similar to that of the tampered-with apparatus specifying system.

## Claims

1. A tampered-with apparatus specifying system comprising:
an operation unit that transmits operation information, which is information for operating a plurality of apparatuses; and
a body unit that is a body portion included in at least one work machine and receives the operation information,
wherein the operation unit includes
an operation unit-side key holding unit that holds a plurality of operation unit-side keys, and
an operation unit-side code generation unit,
the body unit includes
the plurality of apparatuses operated based on the operation information,
a body unit-side key holding unit that holds a plurality of body unit-side keys,
a body unit-side code generation unit, and
a tampering detection unit,
the plurality of operation unit-side keys and the plurality of body unit-side keys are each set to correspond to the plurality of apparatuses, and set to be different from one another for each of the plurality of apparatuses,
the operation unit-side code generation unit generates an operation unit-side tampering detection code based on specific information that is information included in the operation information and is information corresponding to a specific apparatus that is one or more apparatuses among the plurality of apparatuses, and the operation unit-side key that corresponds to the specific apparatus among the plurality of operation unit-side keys,
the operation unit transmits the operation unit-side tampering detection code and the operation information to the body unit,
the body unit-side code generation unit generates a body unit-side tampering detection code based on the specific information received from the operation unit and the body unit-side key that corresponds to the specific apparatus among the plurality of body unit-side keys, and
the tampering detection unit detects tampering with the specific information by determining whether the operation unit-side tampering detection code matches the body unit-side tampering detection code.

2. The tampered-with apparatus specifying system according to claim 1, wherein
the one or more specific apparatuses include a plurality of specific apparatuses,
the tampered-with apparatus specifying system further includes a notification unit that generates notification when the tampering detection unit detects tampering with the specific information, and
the notification unit changes content of the notification depending on the specific apparatus corresponding to the specific information with which the tampering detection unit has detected tampering.

3. The tampered-with apparatus specifying system according to claim 2, wherein
a warning degree is set for each of the plurality of apparatuses according to a magnitude of an influence of tampering with the operation information on an operation of the apparatus, and
the notification unit changes the content of the notification depending on the warning degree set in the specific apparatus corresponding to the specific information with which the tampering detection unit has detected tampering.

4. The tampered-with apparatus specifying system according to claim 3, wherein
the plurality of apparatuses include
an end apparatus provided on a most downstream side in a transmission path of the operation information in the body unit, and
an information apparatus that processes the operation information to be transmitted to the end apparatus and outputs the operation information having been processed to the downstream side, and
the warning degree set for the information apparatus is higher than the warning degree set for the end apparatus.

5. The tampered-with apparatus specifying system according to claim 3 or 4, wherein
the at least one work machine includes a plurality of work machines, and
when the tampering detection unit included in each of the plurality of work machines detects tampering with the specific information, the notification unit generates the notification corresponding to the warning degree for the work machine including the tampering detection unit that has detected tampering with the specific information.

6. The tampered-with apparatus specifying system according to any one of claims 1 to 5, wherein
the body unit-side key holding unit collectively holds the plurality of body unit-side keys that correspond to the plurality of apparatuses.

7. The tampered-with apparatus specifying system according to any one of claims 1 to 6, further comprising
a key generation unit that newly generates the operation unit-side key and the body unit-side key that correspond to the specific apparatus corresponding to the specific information with which the tampering detection unit has detected tampering.

8. The tampered-with apparatus specifying system according to any one of claims 1 to 7, wherein
the operation unit-side tampering detection code and the body unit-side tampering detection code are message authentication codes.

9. The tampered-with apparatus specifying system according to any one of claims 1 to 8, wherein
the operation unit-side key that corresponds to one apparatus of the plurality of apparatuses is identical to the body unit-side key that corresponds to the one apparatus.

10. A tampered-with apparatus specifying program used for a work machine including an operation unit that transmits operation information, which is information for operating a plurality of apparatuses, and a body unit that is a body portion included in at least one work machine, receives the operation information, and includes a plurality of apparatuses operated based oii the operation information, the tampered-with apparatus specifying program causing a computer to execute:
an operation unit-side key holding step of causing the operation unit to hold a plurality of operation unit-side keys;
an operation unit-side code generation step;
a transmission step of transmitting information from the operation unit to the body unit;
a body unit-side key holding step of causing the body unit to hold a plurality of body unit-side keys;
a body unit-side code generation step; and
a tampering detection step,
wherein the plurality of operation unit-side keys and the plurality of body unit-side keys are each set to correspond to the plurality of apparatuses, and set to be different from one another for each of the plurality of apparatuses,
in the operation unit-side code generation step, an operation unit-side tampering detection code is generated based on specific information that is information included in the operation information and is information corresponding to a specific apparatus that is one or more apparatuses among the plurality of apparatuses, and the operation unit-side key that corresponds to the specific apparatus among the plurality of operation unit-side keys,
in the transmission step, the operation unit-side tampering detection code and the operation information are transmitted from the operation unit to the body unit,
in the body unit-side code generation step, a body unit-side tampering detection code is generated based on the specific information received by the body unit from the operation unit and the body unit-side key that corresponds to the specific apparatus among the plurality of body unit-side keys, and
in the tampering detection step, tampering with the specific information is detected by determining whether the operation unit-side tampering detection code matches the body unit-side tampering detection code.

11. A tampered-with apparatus specifying method used for a work machine including an operation unit that transmits operation information, which is information for operating a plurality of apparatuses, and a body unit that is a body portion included in at least one work machine, receives the operation information, and includes a plurality of apparatuses operated based on the operation information, the tampered-with apparatus specifying method comprising:
an operation unit-side key holding step of causing the operation unit to hold a plurality of operation unit-side keys;
an operation unit-side code generation step;
a transmission step of transmitting information from the operation unit to the body unit;
a body unit-side key holding step of causing the body unit to hold a plurality of body unit-side keys;
a body unit-side code generation step; and
a tampering detection step,
wherein the plurality of operation unit-side keys and the plurality of body unit-side keys are each set to correspond to the plurality of apparatuses, and set to be different from one another for each of the plurality of apparatuses,
in the operation unit-side code generation step, an operation unit-side tampering detection code is generated based on specific information that is information included in the operation information and is information corresponding to a specific apparatus that is one or more apparatuses among the plurality of apparatuses, and the operation unit-side key that corresponds to the specific apparatus among the plurality of operation unit-side keys,
in the transmission step, the operation unit-side tampering detection code and the operation information are transmitted from the operation unit to the body unit,
in the body unit-side code generation step, a body unit-side tampering detection code is generated based on the specific information received by the body unit from the operation unit and the body unit-side key that corresponds to the specific apparatus among the plurality of body unit-side keys, and
in the tampering detection step, tampering with the specific information is detected by determining whether the operation unit-side tampering detection code matches the body unit-side tampering detection code.
